# EUROPÄISCHE PATENTSCHRIFT

(11) **EP 1 876 906 B1**
(45) Veröffentlichungstag und Bekanntmachung des Hinweises auf die Patenterteilung: **09.09.2009**
(21) Anmeldenummer: 06753454.5
(22) Anmeldetag: 28.04.2006
(51) Int. Cl.: A23D 9/02, A61K 31/202, A23D 9/00, A23L 1/22, A23L 1/30

(54) **NAHRUNGSERGÄNZUNGSMITTEL ODER FUNCTIONAL FOOD ENTHALTEND ÖL-KOMBINATION**
NUTRITIONAL SUPPLEMENT OR FUNCTIONAL FOOD COMPRISING OIL COMBINATION
COMPLEMENT ALIMENTAIRE OU ALIMENT FONCTIONNEL CONTENANT UNE COMBINAISON D'HUILES

(30) Priorität: 29.04.2005 EP 05009471; 17.01.2006 EP 06000920
(43) Veröffentlichungstag der Anmeldung: 16.01.2008
(73) Patentinhaber: Vinorica S.L., 07330 Consell Mallorca (ES)
(72) Erfinder: POPP, Michael A., 91207 Lauf/Pegnitz (DE)
(74) Vertreter: Simandi, Claus
(86) Internationale Anmeldenummer: PCT/EP2006/004021
(87) Internationale Veröffentlichungsnummer: WO 2006/117164

(56) Entgegenhaltungen:
- EP-A- 0 319 360
- EP-A- 0 494 707
- EP-A- 1 510 133
- DE-A1- 3 230 103
- DE-A1- 10 214 005
- GB-A- 2 392 448
- ANONYMOUS: "Matière grasse à tartiner et cuisiner- réduire le cholesté" INTERNET ARTICLE, [Online] XP002333065 Gefunden im Internet: URL:http://www.primevere.com/primevere/hui le.php> [gefunden am 2005-06-22]

## Beschreibung

Die vorliegende Erfindung betrifft ein Nahrungsergänzungsmittel oder Functional Food enthaltend oder bestehend aus (a) ein(em) Nussöl in einer Menge von 0,5 bis 20 Volumenprozent; (b) eine(r) oder mehr ω-3-fettsäurenhaltige(n) Quelle(n) in einer Menge von 10 bis 50 oder 10 bis 90 Volumenprozent, wobei die Gesamtmenge von ω-3-Fettsäuren in jeder der ω-3-fettsäurenhaltigen Quellen mindestens 20 Volumenprozent beträgt; und (c) einen/m Geschmacksträger in einer Menge von 10 bis 89,5 Volumenprozent. Weiterhin betrifft die vorliegende Erfindung Speiseöl bestehend aus oder enthaltend das erfindungsgemäße Nahrungsergänzungsmittel oder Funktional Food. Schließlich betrifft die vorliegende Erfindung die Verwendung des erfindungsgemäßen Nahrungsergänzurigsmittels oder Functional Food als Speiseöl.

Herz-Kreislauf-Erkrankungen stehen in Deutschland und Europa an der Spitze der Todesursachenstatistik. Hinter diesem Sammelbegriff verbergen sich verschiedene Krankheitsbilder wie Herzinfarkt, plötzlicher Herztod und Angina pectoris. Oft spricht man in diesem Zusammenhang auch von der sogenannten Koronaren Herzkrankheit, abgekürzt als KHK bezeichnet. Die gemeinsame Ursache all dieser häufigen Erkrankungen ist oftmals eine Verkalkung der Arterien, die sich über viele Jahre unbemerkt entwickelt. Nach und nach verengten sich dadurch die Blutgefäße, das Blut kann nicht mehr ungehindert fließen. So wird das Herz nicht mehr optimal durchbluten. Im schlimmsten Fall kommt es zu einer plötzlichen Verstopfung des Gefäßes, als Thrombose bezeichnet, wodurch die Blut- und Sauerstoffversorgung des Herzens ganz unterbrochen wird. Die Folge ist ein Herzinfarkt.

Zahlreiche wissenschaftliche Untersuchungen haben nachgewiesen, dass falsche Ernährungsgewohnheiten eine der Hauptursachen für diese Risikofaktoren sind. Das bedeutet, dass durch eine entsprechende Umstellung der Ernährung die Entstehung einer Arterienverkalkung hinausgezögert oder sogar ganz verhindert werden kann. Im Zusammenhang mit der Ernährung spielen neben den Vitaminen vor allem die Menge und Art der verzehrten Fette eine entscheidende Rolle für die Entwicklung und das Fortschreiten von Herz-Kreislauf-Erkrankungen. Die richtige Balance zwischen gesättigten Fettsäuren tierischen Ursprungs und ungesättigten Fettsäuren aus Pflanzen und Fischen gewinnt dabei zunehmend an Bedeutung. Von besonderem Interesse sind die sogenannten ω-3-Fettsäuren und ω-6-Fettsäüren. ω-6-Fettsäuren sind in vielen pflanzlichen Ölen zu finden und werden daher bei unseren derzeitigen Ernährungsgewohnheiten in ausreichenden Mengen verzehrt. Die Linolsäure, der wichtigste Vertreter dieser Familie, kommt beispielsweise reichlich in Saflor-, Sonnenblumen-, Soja-, Mais- und Weizenkeimöl, aber auch in Margarine vor. Mehrfach ungesättigte Fettsäuren vom Typ ω-3 sind dagegen, zumindest in hohen Konzentrationen, lediglich in bestimmten fetten Fischarten und in Algen enthalten.

ω-3- und ω-6-Fettsäuren zählen zu den langkettigen mehrfach ungesättigten Fettsäuren. Das heißt, sie bestehen aus mindestens 18 Kohlenstoffatomen (C) und haben mehr als eine Doppelbindung. Das w bzw. n steht dafür, dass die Kette der Fettsäuren von der Methylgruppe her numeriert wird. Die Angabe 3 bzw. 6 bezeichnet die Position der ersten Doppelbindung am dritten bzw. sechsten Köhlenstoffatom. Da der menschliche Organismus beide Fettsäuren nicht aus anderen Fettsäuren aufbauen kann, gelten die ω-3-Fettsäure und die ω-6-Fettsäure als essentiell. Aus diesen beiden Fettsäuren kann der Körper mit Hilfe der Enzyme Desaturase und Elongase in begrenzten Mengen die längerkettigen Verbindungen aufbauen, die er für verschiedene Stoffwechselfunktionen benötigt.

Eine Reihe von Eigenschaften der ω-3-Fettsäuren tragen zur vorbeugenden Wirkung vor Herzinfarkt bei: Studien an Gesunden und Kranken haben gezeigt, dass eine hohe Aufnahme an ω-3-Fettsäuren wie Triglycerid- und Cholesterinwerte im Blut reduzieren kann. Eine deutliche Senkung der Blutfettwerte trat allerdings erst bei einer relativ hohen Aufnahme von 3-4 Gramm pro Tag auf. Die ω-3-Fettsäuren reduzieren insbesondere das ungünstige LDL-Cholesterin. Forschern ist zudem aufgefallen, dass das Blut der Inuiten langsamer gerinnt als das der Europäer. Für Personen, die Herzinfarkt gefährdet sind, ist dies erwünscht. Denn vielfach sind es Blutgerinnsel, die die verengten Adern verstopfen und so einen Infarkt auslösen. ω-3-Fettsäuren bewirken, dass weniger Substanzen gebildet werden, die die Blutgerinnung fördern. Gleichzeitig dienen ω-3-Fettsäuren als Ausgangsprodukt für Stoffe, die die Blutgefäße erweitern, so dass sich Gerinnsel nicht so leicht festsetzen können. Werden ω-3-Fettsäuren vermehrt in die Zellwände eingebaut, sind zudem die roten Blutkörperchen elastischer, was ebenfalls einen ungestörten Blutfluss fördert. Diese Eigenschaften scheinen sich auch günstig auf den Blutdruck auszuwirken.

Bereits seit vielen Jahren ist bekannt, dass Fettsäuren auch bestimmte Immunfaktoren und Entzündungsprozesse beeinflussen. In klinischen Studien wird daher ihr Effekt auf chronisch entzündliche Erkrankungen wie Colitis Ulcerosa, Morbus Crohn, Rheuma und Mukoviszidose untersucht. Ungesättigte Fettsäuren sind Bausteine für Gewebshormone, die auf den Ablauf von Entzündungen einwirken. Während die aus der ω-6-Fettsäure gebildeten Hormone Entzündungen eher fördern, wirken Prostaglandine und Leukotriene, die aus der ω-3-Fettsäure EPA produziert werden, entzündungshemmend. Für Patienten, die an einer entzündlichen Erkrankung leiden, scheint es daher günstig zu serin insbesondere vermehrt ω-3-Fettsäuren aufzunehmen.

Bei Patienten mit Dickdarmkrebs, die täglich Fischölkonzentrate mit zwei bis sieben Gramm ω-3-Fettsauren schluckten, teilten sich die Krebszellen langsamer als bei einer Vergleichsgruppe. Eine tumorhemmende Wirkung ließ sich aber nur nachweisen, wenn der Gesamtfettgehalt der Nahrung nicht mehr als 30 Prozent der Energiezufuhr betrug. Neben anderen Maßnahmen empfehlen die Experten daher; zur Krebsvorbeugung auf ein ausgewogenes Verhältnis von ω-6- zu ω-3-Fettsäuren und auf eine niedrige Gesamtfettzufuhr zu achten.

Weiterhin wird in der Literatur eine vorteilhafte Wirkung von ω-3 Fettsäuren bei Rheumatoider Arthritis diskutiert (Rennie et al. "Nutritional management of rheumatoid arthritis: a review of the evidence", J. Hum. Nutr. Dietet. 16, (2003), Seiten 97-109). Dabei wird auf Dokumentationen verwiesen, die einen positiven Effekt von langkettigen n-3 vielfach ungesättigten Fettsäuren auf die Symptome darstellen. Es wird eine Diät empfohlen, die reich an langkettigen n-3 PUFA und Antioxidantien ist. Des weiteren wird ausgeführt, dass mit anderen Ölen keine signifikante Verbesserung gesehen würde.

Eine weitere Studie befasst sich mit den Effekten von verschiedenen Ölen auf die Gesundheit, insbesondere auf Herzerkrankungen (Katan et al., "Dietary oils, serum lipoproteins, sand coronary heart disease", Am. J. Clin. Nutr. 61 (1995), 1368-1373). Dabei wird die Bevölkerung von Kreta als Beispiel einer Bevölkerung hervorgehoben, die auf der Basis einer hohen Einnahme von Olivenöl als Fettquelle eine niedrige Häufigkeit an Herzerkrankungen aufwies. Auch diese Studie bestätigt, dass gesättigte Fettsäuren im Prinzip LDL-Cholesterin erhöhten und damit die Anfälligkeit für Herzerkrankungen. Dagegen setzen ungesättigte Fettsäuren dieses Risiko herab. Es wird ferner beschrieben, dass Fischöle LDL und Apoprotein B im Blut erhöhen können, wobei das gleiche für fetten Fisch gilt. Allerdings haben Fischöl und fetter Fisch vorteilhafte Auswirkungen auf die Serumtriglyceride sowie "very-low-density lipoprotein". Dennoch gilt als erwiesen, dass Fischöle in Populationen, die viel Fischöl zu sich nehmen, die Häufigkeit an Herzerkrankungen herabsetzt.

Eine weitere Publikation diskutiert die Wirksamkeit von pflanzliche und marinen ω-3 Fettsäuren in der Prävention und Behandlung verschiedener Erkrankungen wie Herzkreislauferkrankungen und Schlaganfall (Kris-Etherton et al., "Fish Consumption, Fish Oil, ω-3 Fatty Acids, and Cardiovascular Disease", Circulation 106 (2002), p. 2747-2757). Im wesentlichen werden groß angelegte Studien diskutiert, die überwiegend belegen, dass diese Fettsäuren einen positiven/präventiven Effekt auf Krankheitsverläufe/Krankheitsäusbrüche haben. Allerdings ist bei einigen Studien auch keine Wirksamkeit nachgewiesen worden. Während Fischöl und fetter Fisch als Hauptquellen für marine ω-3 Fettsäuren (insbesondere EPA und DHA) genannt werden, werden bei den pflanzlichen Produkten Olivenöl, Rapsöl, Walnussöl und Leinsamenöl genannt, die nicht ganz so hohe Konzentrationen enthalten.

Darlington et al. ("Antioxidantien and fatty acids in the amelioration of rheumatoid arthritis and related disorders", British Journal of Nutrition, 85 (2001), 251-269) diskutieren die Möglichkeiten zur Behandlung von RA und ähnlichen Krankheiten wie Lupus erythromatosis. Während die Aktoren darauf verweisen, dass verfügbaren Studien aufgrund der Versuchsbedingungen nicht 100%zig aussagekräftig sind, wird dennoch deutlich, dass langkettige ω-3 Fettsäuren einen positiven Einfluss auf die Krankheit haben. In Zusammenhang mit der Gabe von Fischöl wird ausgeführt, dass dieses zusammen mit einem Anti-Oxidans gegeben wird. Weiterhin wird ausgeführt, dass die gemeinsame Gabe von EPA und DHA wirksamer ist als die Gabe einer dieser ungesättigten Fettsäuren alleine. Schließlich berichten die Autoren davon, dass ein marines Extrakt von Pema canaliculus, der reich an biologisch-aktiven Ölen und natürlichen Anti-Oxidantien war, neben einem therapeutischen auch eine protektiven Effekt gegenüber entzündlicher Arthritis in Ratten aufweist.

Insgesamt zeigt sich also, dass in bestimmten Lebenssituationen, der auch generell, eine vermehrte Aufnahme von ω-3 Fettsäuren wünschenswert wäre. Besonders vorteilhafte Quellen von ω-3 Fettsäuren sind Algen und bestimmte Fischarten. Im Stand der Technik ist jedoch bekannt, dass die Aufnahme von ω-3 Fettsäuren mit der Wahrnehmung eines als unangenehm empfundenen Fischgeschmacks verbunden wird. Aus diesem Grunde kommt der Formulierung der ω-3 Fettsäuren in Form von Kapseln zur Zeit noch eine herausragende Bedeutung zu, da bei dieser Art der Aufnahme von ω-3 Fettsäuren der unangenehme, Geruch oftmals kaum wahmehmbar, wenn auch bei Ausstoßen nicht zu vermeiden ist. Eine Verwendung, beispielsweise in Form eines Speiseöls mit hohem Anteil an ω-3 Fettsäuren ist jedoch aus den genannten Gründen ausgeschlossen.

Es zeigt sich auch, dass im Falle vieler auf dem Markt befindlicher, ω-3-fettsäurehaltiger Produkten wie beispielsweise Öle oder Ölmischungen eine ausreichende Versorgung mit ω-3 Fettsäuren bei einer Verwendung als Speise- oder Salatöl nicht sichergestellt ist oder sich die ω-3-fettsäurehaltigen Produkte geschmacklich nicht für die Verwendung in Speise- und Salatölen eignen. Auch ist das Verhältnis von ω-6 Fettsäuren zu ω-3 Fettsäuren häufig nicht im Einklang mit behördlichen Ernährungsempfehlungen. Des weiteren stellen bestimmte auf dem Markt befindliche ω-3-fettsäurehaltige Ölmischungen besondere Anforderungen an die Lagerung. Diese muss bei niedriger Temperatur erfolgen, wobei dennoch die Lagerfähigkeit begrenzt ist (zu allen hier genannten Punkten s. beispielsweise die Ausführungen auf Seite 5 in der Patentanmeldung GB-A 2392448 betreffend ein Produkt, names Primevère).

Der Erfindung lag somit die Aufgabe zugrunde, ein Nahrungsergänzungsmittel oder Functional Food bereitzustellen, das die vorstehend erörterten Probleme löst und auch als Grundlage für ein Speise- oder Salatöl oder als Speise- oder Salatöl eingesetzt werden kann.

Die Lösung der Aufgabe erfolgt durch die in den Ansprüchen gekennzeichneten Ausführungsformen.

Somit betrifft die vorliegende Erfindung ein Nahrimgsergänzungsmittel oder Functional Food enthaltend oder bestehend aus (a) ein(em) Nussöl in einer Menge von 0,5 bis 20 Volumenprozent; (b) eine(r) ω-3-fettsäurenhaltige(n) Quelle in einer Menge von 10 bis 50 Volumenprozent, wobei die Gesamtmenge von ω-3-Fettsäuren mindestens 20 Volumenprozent beträgt; und wobei die ω-3-fettsäurehaltige Quelle Perillaöl oder Arganöl ist und (c) einen/m Geschmacksträger in einer Menge von 1-0 bis 89,5 Volumenprozent.

"Nahrungsergänzungsmittel" sind im allgemeinen Lebensmittel, die einen oder mehrere Nährstoffe in konzentrierter Form enthalten. Sie umfassen in lebensmitteluntypischer Form üblicherweise Kapseln, Pastillen, Tabletten, Flüssigkeiten. Weitere typische Darreichungsformen sind Pulverbeutel, Flüssigampullen, Flaschen mit Tropfeinsätzen und ähnlichen Darreichungsformen von Flüssigkeiten und Pulvern zur Aufnahme ein abgemessenen kleinen Mengen, die der Ergänzung der Ernährung dienen sollen. Erfindungsgemäß bevorzugt ist eine flüssige/ölige oder streichfähige Konsistenz.

Als "Functional Food" werden erfindungsgemäß Lebensmittel und entsprechende neuentwickelte Produkte zusammengefasst, denen aufgrund besonderer Inhaltsstoffe mehr als nur der reine Nähr- und Geschmackswert zukommt. Erfindungsgemäß geht es um die mittel- oder langfristige Erhaltung und Förderung der Gesundheit. Hier sind bevorzugt nicht-therapeutische Anwendungen umfasst. Synonym, teilweise aber auch differenzwert, werden die Begriffe Nutriceuticals, Foodsceuticals und Designer Foods verwendet, die ebenfalls Ausführungsformen gemäß der Erfindung darstellen. Der präventive Aspekt und die Förderung der Gesundheit sowie der Lebensmittelcharakter der Produkte werden aber am besten durch den Begriff Functional Food deutlich gemacht. In vielen Fällen handelt es sich um Produkte, die durch Auswahl und Selektion (wie auch im Falle der vorliegenden Erfindung), Reinigung, Konzentration, zunehmend auch durch Addition angereichert wurden. Isolierte Wirksubstanzen, zumal in Tabletten- oder Pillenform, werden nicht dazugezählt.

Der Begriff ω-3-Fettsäuren" (omega-3 Fettsäuren) bezeichnet eine für den Menschen wichtige Fettsäurefamilie, die einen bestimmten Stoffwechselweg oder mehrere Stoffwechselwege kennzeichnet. "Omega-3" bedeutet, dass die letzte Doppelbindung in der meist mehrfach ungesättigten Kohlenstoffkette der Fettsäure bei der von der Carboxylgruppe aus gesehen drittletzten C-C-Bindung vorliegt. Dazu gehören beispielsweise Linolensäure, Eicosapentaensäure (EPA) und Docosahexaenoicsäure (Docosahexaensäure; DHA). -Linolensäure kommt hierbei nach heutigem Kenntnisstand im wesentlichen die Rolle einer Vorstufe zu, aus der der menschliche Körper in gewissem Umfang die gesundheitsrelevanten längerkettigen ω-3-Fettsäuren wie EPA und DHA herstellen kann. Der Begriff "längerkettig" bezeichnete in diesem Zusammenhang Fettsäuren mit 20 bzw. 22 Kohlenstoffatomen. Die ω-3-Fettsäure kann in Form eines Öls zugesetzt werden oder aus einer anderen Quelle stammen. In jedem Fall ist zu beachten, dass die Gesamtmenge von ω-3-Fettsäuren mindestens 20 Volumenprozent, z.B. mindestens 30 Volumenprozent wie mindestens 40 Volumenprozent beträgt. Diese Angaben beziehen sich auf den Gehalt der erfindungsgemäßen ω-3-fettsäurenhaltigen Quelle an ω-3-Fettsäüren. Hierbei handelt es sich um ein wesentliches Merkmal der erfindungsgemäßen ω-3-fettsäurenhaltigen Quellen, die sich darin von anderen Produkten, beispielsweise Ölen, unterscheiden, die zwar ω-3-Fettsäuren enthalten, jedoch in einer Konzentration, die unterhalb von 20 Volumenprozent liegt. Erfindungsgemäße ω-3-fettsäurenhaltigen Quellen können ein Gemisch sämtlicher ω-3-Fettsäuren enthalten. Es kann auch eine (oder mehrere) spezifische ω-3-Fettsäure(n) in den Vordergrund treten, während andere nur in Spuren anwesend sind.

Die Angabe wobei die Gesamtmenge von ω-3-Fettsäuren mindestens 20 Volumenprozent beträgt" bezieht sich auf den Volumenprozent-Anteil von ω-3-Fettsäuren in der Komponente (b). Mit anderen Worten betrifft die vorliegende Erfindung ein Nahrungsergänzungsmittel oder Functional Food enthaltend oder bestehend aus (a) ein(em) Nussöl in einer Menge von 0,5 bis 20 Volumenprozent; (b) eine(r) ω-3-fettsäurenhaltige(n) Quelle in einer Menge von 10 bis 50 Volumenprozent, wobei die Gesamtmenge von ω-3-Fettsäuren in der ω-3-fettsäurenhaltigen Quelle mindestens 20 Volumenprozent beträgt; und (c) einen/m Geschmacksträger in einer Menge von 10 bis 89,5 Volumenprozent. Erfindungsgemäße ω-3-fettsäurenhaltige Quellen können 20, 30, 40, 50; 60, 70, 80 oder 90 Vol.-%, bezogen auf die Quelle, ω-3-Fettsäuren enthalten. Sie können in bestimmten Fällen auch ausschließlich aus ω-3-Fettsäuren bestehen. Sofern ein niedrigerer Anteil an Komponente (b) in dem Nahrungsergänzungsmittel oder Functional Food vorliegt, z.B. ein Volumenprozent Anteil von 10%, ist bevorzugt, dass der Gehalt der Komponente (b) an ω-3-Fettsäuren einen hohen Wert, beispielsweise 40, 50, 60 oder über 60 Volumenprozent, annimmt. Wenn hingegen der Anteil an Komponente (b) im Nahrungsergänzungsmittel oder

Functional Food relativ hoch ist und z.B. bei 50% liegt, kann der Anteil an ω-3-Fettsäuren in dieser Komponente (b) niedriger sein, und z.B. bei 20% liegen.

Sämtliche Prozentangaben, sofern nicht anders angegeben, beziehen sich auf Volumenprozent (Vol.-%). Der Volumenprozentsatz einer Komponente ist das Hundertfache des Quotienten (Volumen der Komponente) geteilt durch (Volumen des erfindungsgemäßen Nahrungsergänzungsmittels oder Functional, Food). Auf Grund der ähnlichen Dichte der ins Auge gefassten Öle nimmt der Massenprozentsatz einen dem entsprechenden Volumenprozentsatz ähnlichen Wert an.

Der Begriff Geschmacksträger" bezeichnet allgemeinhin einen Stoff, der maßgeblich den wahrgenommen Geschmack eines Nahrungsmittels beeinflusst oder der maßgeblich zum geschmacklichen Charakter des Nahrungsmittels beiträgt.

Die vorstehend genannten Prozentangaben ergänzen sich zu 100%, wenn das Nahrungsergänzungsmittel oder Functional Food aus den Komponenten besteht. Bevorzugt ist, dass die maximale Menge an der ω-3 fettsäurehaltigen Quelle oder die Gesamtmenge der ω-3 fettsäurehaltigen Quellen 45%, wie 40% oder 35% beträgt.

Aus epidemiologischen Untersuchungen geht hervor, dass ca. 0,2-0,5g ω-3 Fettsäuren, pro Tag günstige Wirkungen hervorrufen. Daher dürften nach heutiger Kenntnis zur Vorbeugung ungefähr 0,5g Fischöl (mit 30% ω-3-Fettsäuren) ausreichend sein, während man bei bestehenden Herzerkrankungen oder entzündlichen Erkrankungen (z.B. Rheuma, Psoriasis etc.) diese Dosis auf ca. 1,5-2,5 g/Tag (ca. 20g/Woche) steigern kann.

Das von der FDA zugelassene Produkt Omacor® enthält pro Gramm etwa 465 mg EPA und etwa 375 mg DHA, also einen Gehalt an ω-3-Fettsäuren von etwa 840 mg pro g des Produkts. Die empfohlene Tagesdosis ist 4 g Omacor®, was etwa 3.36 g ω-3-Fettsäuren entspricht. Im folgenden wird diese Dosis mit der aufgenommenen Menge EPA und DHA vergleichen, wenn das erfindungsgemäße Nahrungsergänzungsmittel oder Functional Food beispielsweise zur Bereitung eines Salats verwendet, wird: Zum Zwecke eines exemplarischen Vergleichs des erfindungsgemäßen Nahrungsergänzungsmittels oder Functional Food mit Omacor® sei angenommen, dass das Nahrungsergänzungsmittel oder Functional Food als Salatöl verwendet wird, was explizit von der vorliegenden Erfindung umfasst ist. In diesem Fall werden z.B. 4 Esslöffel, entsprechend 50 g des Nahrungsergänzungsmittel oder Functional Food verwendet. Das Nahrungsergänzungsmittel möge 20 Vol.-% Lachsöl enthalten, das seinerseits 30 Vol.-% (bezogen auf das reine Lachsöl) ω-3-Fettsäuren; und zwar EPA und DHA, enthält. 50 g erfindungsgemäßes Salatöl enthält unter diesen Vorraussetzungen (die alle Gegenstand bevorzugter Ausführungsformen sind; s. unten) 3 g ω-3-Fettsäuren, und zwar EPA und DHA. Enthält das erfindungsgemäße Nahrungsergänzungsmittel des weiteren auch Perillaöl, das im wesentlichen α-Linolensäure liefert, so wird die Versorgung mit EPA und DHA dadurch indirekt noch verbessert, da der menschliche Körper in der Lage ist, aus α-Linolensäure in gewissem Umfang EPA bzw. DHA herzustellen. Zusammengefasst wird durch die Bereifung eines Salats pro Tag mit dem erfindungsgemäßen Nahrungsergänzungsmittel oder Functional Food eine der Einnahme der empfohlenen Tagesdosis Omacor® vergleichbare oder größere wirksame Menge an ω-3-Fettsäuren zugeführt.

Die vorliegenden Bereichsdaten der Tabelle 1 sind aufgrund von Verkostungsversuchen entstanden. Sie belegen, dass das erfindungsgemäße Nahrungsergänzungsmittel oder Functional Food, trotz hoher Konzentrationen von ω-3 fettsäurehaltigen Quellen (bis zu 50 Volumenprozent), nicht mit der' Wahrnehmung eines als unangenehm empfundenen Fischgeruchs verbunden wird.

Mit dem erfindungsgemäßen Nahrungsergänzungsmittel oder Functional Food wird überraschenderweise also erreicht, dass durch die Zugabe von Nussöl der "fischige" Geschmack der ω-3 Fettsäure, nicht aber der Geschmack des Pflanzenöls verloren geht. Dadurch bekommt das erfindungsgemäße Nahrungsergänzungsmittel oder Functional Food, welches aufgrund des erheblichen Anteils an ω-3 Fettsäuren einen hohen gesundheitlichen Wert hat, den Geschmack eines ganz normalen Speiseöls. In einigen Ausführungsformen dient ein Nussöl (auch) als Geschmacksträger, z.B. in Fällen, in denen zwei Nussöle zugegeben werden (vgl. Tabelle 1),

Die Schwelle, ab der ein "fischiger" Geschmack in der erfindungsgemäßen Kombination überhaupt noch wahrgenommen wird liegt, personenabhängig, immerhin bei einem Anteil von etwa 50% der ω-3-fettsäurenhaltigen Quelle an dem Nahrungsergänzungsmittel oder Functional Food. Ab einem Anteil von 60% lassen sich in den genannten sensorischen Tests keine individuellen Wahmehmungsunterschiede mehr feststellen, d.h. auch in der Kombination der genannten Komponenten kommt dann der fischige Geschmack durch.

Die Formulierung Nahrungsergänzungsmittel öder Functional Food enthaltend" macht deutlich, dass anstelle einer ω-3-fettsäurenhaltigen Quelle auch zwei oder mehr ω-3-fettsäurenhaltige Quellen als Bestandteile des erfindungsgemäßen Nahrungsergänzungsmittels oder Functional Food explizit ins Auge gefasst sind. Dementsprechend betrifft die vorliegende Erfindung auch ein Nahrungsergänzungsmittel oder Functional Food enthaltend oder bestehend aus (a) ein(em) Nussöl in einer Menge von 0,5 bis 20 Volumenprozent; (b) zwei oder mehr ω-3-fettsäurenhaltige(n) Quellen die zusammen einen Anteil von 10 bis 50 Volumenprozent des Nahrungsergänzungsmittels oder Functional Food bilden, wobei die Gesamtmenge von ω-3-Fettsäuren in jeder der ω-3-fettsäurenhaltigen Quellen mindestens 20 Volumenprozent beträgt; und (c) einen/m Geschmacksträger in einer Menge von 10 bis 89,5 Volumenprozent.

Des weiteren betrifft die vorliegende Erfindung ein Nahrungsergänzungsmittel oder Functional Food enthaltend öder bestehend aus (a) ein(em) Nussöl in einer Menge von 0,5 bis 20 Volumenprozent, (b) zwei oder mehr ω-3-fettsäurenhaltige(n) Quellen die zusammen einen Anteil von 10 bis 90 Volumenprozent des Nahrungsergänzungsmittels oder Functional Food bilden, wobei die Gesamtmenge von ω-3-Fettsäuren in jeder der ω-3-fettsäurenhaltigen Quellen mindestens 20 Volumenprozent beträgt; und (c) einen/m Geschmacksträger in einer Menge von 10 bis 89,5 Volumenprozent. In einer bevorzugten Ausführungsform wird das Nussöl ausgewählt aus der Gruppe bestehend aus Haselnussöl, Mandelöl, Walnussöl, Pekannussöl, Paranussöl, Cashewnussöl, Pistazienöl, Makadamiaöl, Pinienkernöl. Besonders bevorzugt sind hierbei Haselnussöl, Mandelöl und Walnussöl. Walnussöl zeichnet sich des weiteren durch ein besonders vorteilhaftes Verhältnis von ω-6-Fettsäuren zu ω-3-Fettsäuren aus. Diese Verhältnis hat für Walnussöl einen Wert von etwa 4. Der Begriff "ω-6-Fettsäuren" (omega-6 Fettsäuren) bezeichnet eine Familie einfach oder mehrfach ungesättigter Fettsäuren. "Omega-6" bedeutet, dass die letzte Doppelbindung in der meist mehrfach ungesättigten Kohlenstoffkette der Fettsäure bei der - von der Carboxylgruppe aus gesehen - sechstletzten C-C-Bindung vorliegt.

Dieser erfindungsgemäßen Ausführungsform liegt die Beobachtung zugrunde, dass die genannten Nussöle in Verköstigungstests als geeignet befunden wurden, den "fischigen" Geschmack der ω-3-fettsäurenhaltigen Quellen zu überdecken oder unterdrücken.

In einer weiteren bevorzugten Ausführungsform liegt der Anteil des Nussöls an dem erfindungsgemäßen Nahrungsergänzungsmittel oder Functional Food zwischen 2 und 10 Volumenprozent. Explizit umfasst sind sämtliche dazwischenliegende Werte wie beispielsweise 3, 4, 5, 6, 7, 8 und 9 Volumenprozent,

In einer anderen bevorzugten Ausführungsform ist die ω-3-fettsäurenhaltige Quelle des erfindungsgemäßen Nahrungsergänzungsmittel oder Functional Foods ein Öl, wie ein natürlicherweise vorkommendes Öl.

In einer weiteren bevorzugten Ausführungsform sind die zwei oder mehr ω-3-fettsäurenhaltigen Quellen zwei oder mehr Öle.

In einer besonders bevorzugten Ausführungsform der Erfindung ist das Öl der die Öle ausgewählt sind aus der Gruppe bestehend aus Fischöl, Algenöl, einem ω-3-fettsäurenhaltigen Pflanzenöl und einem aus Planktonmasse hergestellten Öl, wobei die Planktonmasse vorzugsweise im wesentlichen oder ausschließlich aus Crypthecodinium cohnii besteht. Der Begriff "im wesentlichen" ist an dieser Stelle dergestalt zu verstehen, dass bevorzugt zumindest 50%, stärker bevorzugt zumindest 75%, noch stärker bevorzugt zumindest 90% und an stärksten bevorzugt zumindest 99% der Planktonmasse aus Organismen der Spezies Crypthecodinium cohnii besteht. Bevorzugt werden Fischöle aus fettreichen Kaltwasserfischen wie Hering, Thunfisch, Makrele oder Lachs gewonnen, sind aber auch aus Sardinen, Forellen, Heilbutt, Dorschen, Kabeljau, Schellfisch, Welsen, Flunder und anderen Fischen nach üblichen Verfahren erhältlich. Weiterhin bevorzugt ist die Gewinnung von ω-3 Fettsäuren aus Algen bzw. Algenöl. Bevorzugte Algen sind beispielsweise Mikroalgen, insbesondere der Familien der Braun-, Rot-, Grün- oder Blaugrünalgen. Hiervon sind besonders bevorzugt die Algen aus der Familie den Phaeoophyceae oder Rhodophyceae. Weiterhin bevorzugt sind Aphanizomenon flos-aquae (AFA-Alge), Spirulina, wobei die Mikroalgen Ulkenia sp. und Schizochytrium besonders bevorzugt sind.

Besonders bevorzugt ist, dass das erfindungsgemäße Nahrungsergänzungsmittel oder Functional Food zwei (und nicht mehr) ω-3-fettsäurenhaltige Quellen enthält. Bevorzugt ist insbesondere, dass eine der zwei Quellen ein Fischöl und die andere ein ω-3-fettsäurenhaltiges Pflanzenöl ist.

In jenen Ausführungsformen, wo (i) der Anteil ω-3-fettsäurenhaltiger Quellen am Nahrungsergänzungsmittel oder Funktional Food 50 Volumenprozent übersteigt und (ii) eine der ω-3-fettsäurenhaltigen Quellen ein Fischöl ist, ist bevorzugt, dass der Anteil des Fischöls am Nahrungsergänzungsmittel oder Functional Food 50 Volumenprozent nicht übersteigt. Dadurch wird dem Umstand Rechnung getragen, dass ein Anteil von mehr als 50 Volumenprozent Fischöl zu einer - erfindungsgemäß unerwünschten - Wahrnehmung eines Fischgeschmacks führen kann.

Ein besonders bevorzugtes Fischöl ist Lachsöl. Lachsöl kann beispielsweise in pharmazeutischer Qualität von Fa. Henry Lamotte in Bremen bezogen werden. Dieses Lachsöl wird aus den Körpern der Meereslachse gewonnen und entstammt zu mindestens 60% dem klassischen Atlantik-Lachs *Sa*/*mo sa*/*ar*, die übrigen Anteile anderen Meeres-Lachsen und -Forellen der *Oncorhynches-*Familie. Bevorzugt enthält Lachsöl 23-34% ω-3-Fettsäuren, wovon 9-14% auf Eicosapentaensäure (EPA) und 8-12% auf Docosahexaensäure (DHA) entfallen. Das Lachsöl aus o.g. Quelle hat bei 20°C eine Dichte von 0,920-0,935 kg/dm³.

Ein bevorzugtes ω-3-fettsäurenhaltiges Pflanzenöl ist Perillaöl. Perillaöl kann beispielsweise von Fa. Henry Lamotte in Bremen bezogen werden. Es wird aus den Samen des Lippenblütlers *Perilla (Perilla ocymoides L.),* der den Lavendelarten und dem Gewürzkraut Basilikum nahe steht, durch Pressung/Raffination gewonnen. Bevorzugt enthält Perillaöl 45-64% Linolensäure. Ebenfalls bevorzugt ist, dass Perillaöl 5-10% Palmitinsäure, 1-5% Stearinsäure, 12-25% Ölsäure und 10-20% Linolsäure enthält. Das Perillaöl aus o.g. Quelle hat bei 20°C eine Dichte von 0,925-0,931 kg/dm³.

Ein weiteres bevorzugtes ω-3-fettsäurenhaltiges Pflanzenöl ist Arganöl. Arganöl wird aus den Kernen der Arganbeere, der Frucht des Eisenholz- oder Arganbaums gewonnen. Arganöl weist einen nussigen Geruch und Geschmack auf. Dadurch kann es - außer zur Bereitstellung von ω-3-Fettsäuren - auch zur Überdeckung des Fischgeschmacks verwendet werden, der durch gegebenenfalls anwesendes Fischöl verursacht wirt.

In einem besonders bevorzugten erfindungsgemäßen Nahrungsergänzungsmittel oder Functional Food liegen die beiden ω-3-fettsäurenhaltigen Quelle in gleicher Konzentration, vorzugsweise jeweils 20 Volumenprozent, vor. Enthält das erfindungsgemäße Nahrungsergänzungsmittel oder Functional Food 20 Volumenprozent Lachsöl und 20 Volumenprozent Perillaöl, so bewegt sich der ω-3-Fettsäuregehalt der vereinigten ω-3-fettsäurenhaltigen Quellen, abhängig von der Qualität des Lachs- bzw. Perillaöls, bevorzugt zwischen 34 Vol.-% und 49 Vol.-% (arithmetisches Mittel der oben angegebenen unteren Schranken 23% für Lachsöl und 45% für Perillaöl, bzw. arithmetisches Mittel der oben angegebenen oberen Schranken 34% für Lachsöl und 64% für Perillaöl). Explizit mit umfasst sind sämtliche dazwischenliegende Werte, wie etwa 40 Vol.-%, 45 Vol.-%, 50 Vol.-%, 55 Vol.% und 60 Vol.-% ω-3-Fettsäuregehalt der beiden vereinigten ω-3-fettsäurenhaltigen Quellen. Für den durch die ω-3-fettsäurenhaltigen Quellen vermittelten ω-3-Fettsäuregehalt des erfindungsgemäßen Nahrungsergänzungsmittel oder Functional Food bedeutet dies, dass er bevorzugt zwischen etwa 13 Vol.-% und etwa 20 Vol.-% (40% des ω-3-Fettsäuregehalt der beiden vereinigten ω-3-fettsäurenhaltigen Quellen) liegt. Explizit mit umfasst sind sämtliche dazwischenliegende Werte, wie etwa 14 Vol.-%, 15 Vol.-%, 16 Vol.-%, 17 Vol.-%, 18 Vol.-% und 19 Vol.-%. Kommen andere erfindungsgemäße .relative Mengen der ω-3-fettsäurenhaltigen Quellen zum Einsatz, so kann der durch die ω-3-fettsäurenhältigen Quellen vermittelte ω-3-Fettsäuregehalt des erfindungsgemäßen Nahrungsergänzungsmittel oder Functional Food auch außerhalb des Wertebereichs von etwa 13 Vol.-% bis etwa 20 Vol.-% liegen. Ähnliches gilt für den gesamten ω-3-Fettsäuregehalt des erfindungsgemäßen Nahrungsergänzungsmittel oder Functional Food, da die anderen Komponenten (Nussöl und Geschmacksträger) ebenfalls ω-3-Fettsäuren enthalten können, wenn auch in einer signifikant niedrigeren Konzentration als die erfindungsgemäßen ω-3-fettsäurenhaltigen Quellen.

Explizit umfasst sind auch Nahrungsergänzungsmittel oder Functional Foods, bei denen die beiden ω-3-fettsäurenhaltigen Quellen in unterschiedlicher Konzentration vorliegen. Beispielsweise kann das erfindungsgemäße Nahrungsergänzungsmittel oder Functional Food 30 Vol.-% Fischöl und 40 Vol.-% Perillaöl umfassen.

In einer anderen bevorzugten Ausführungsform der Erfindung sind die ω-3-Fettsäuren der Quelle oder der Quellen Linolensäure (α-Linolensäure), Eicosapentaensäure und/oder Docosahexaensäure, wobei die *cis*-9,12,15-Octadecatriensäure, *cis-*5,8,11,14,17-Eicosapentaensäure und *cis*-4,7,10,13,16,19-Docosahexaensäure besonders bevorzugt sind.

In einer weiteren bevorzugten Ausführungsform der Erfindung ist der Geschmacksträger ein Pflanzenöl. Da der Geschmacksträger maßgeblich zum geschmacklichen Charakter des Nahrungsmittels beiträgt, kommt der Auswahl des Geschmacksträgers eine besondere Bedeutung bei der Herstellung des Nahrungsmittels zu. In besonderen erfindungsgemäßen Ausführungsformen kann der Geschmacksträger auch ein Nussöl sein. In dieser Ausführungsform wird das Nahrungsmittel im wesentlichen aufgrund des Anteils an Nussölen vom nussigen Charakter des Geschmacksträgers geprägt sein.

In einer besonders bevorzugten Ausführungsform ist das Pflanzenöl Olivenöl, Rapsöl, Leinöl, Sojaöl, Weizenkeimöl, Haselnussöl, Walnussöl oder Mandelöl. In diesen Fällen werden die als Geschmacksträger eingesetzten Pflanzenöle maßgeblich den geschmacklichen Charakter des Nahrungsmittels bestimmen. Rapsöl galt lange Zeit aufgrund des relativ hohen Gehalts an Erucasäure als gesundheitlich als bedenklich. Durch Neuzüchtungen, besonders in Kanada und Westeuropa, ist es jedoch gelungen, den Erucasäuregehalt des Öles auf weniger als 1% zu verringern. Entsprechend sollte das erfindungsgemäße Nahrungsergänzungsmittel oder Functional Food möglichst geringe Mengen an Erucasäure enthalten, vorzugsweise im Bereich von weniger als 1%.

In einer weiteren bevorzugten Ausführungsform weist der Geschmacksträger ein niedriges Verhältnis von ω-6-Fettsäuren zu ω-3-Fettsäuren auf. Besonders bevorzugt ist ein Verhältnis von ω-6-Fettsäuren zu ω-3-Fettsäuren von ungefähr 4. Hier sei erwähnt, dass das mittlere Verhältnis von ω-6-Fettsäuren zu ω-3-Fettsäuren bei konventioneller Ernährung etwa 20 ist. Je nach Quelle haben die folgenden erfindungsgemäßen Geschmacksträger die folgenden Verhältnisse von ω-6-Fettsäuren zu ω-3-Fettsäuren (die Angaben des Verhältnisses von ω-6-Fettsäuren zu ω-3-Fettsäuren in Klammern stellen ungefähre Werte dar, die innerhalb der für Naturprodukte typischen Grenzen schwanken können): Leinöl (0.25), Sojaöl (7), Weizenkeimöl (7), Olivenöl (16), Walnussöl (4) und Rapsöl (2). Olivenöl weist ein vergleichsweise hohes Verhältnis von ω-6-Fettsäuren zu ω-3-Fettsäuren auf, ist jedoch durch einen insgesamt niedrigen Gehalt an ω-6-Fettsäuren und ω-3-Fettsäuren charakterisiert.

In einer weiteren bevorzugten Ausführungsform macht der Geschmacksträger 30 bis 60 Volumenprozent des Nahrungsergänzungsmittels oder Functional Food aus. Sämtliche in diesen Wertebereich fallenden Volumenprozentsätze sind explizit mit umfasst, so beispielsweise 35, 40, 45, 50 und 55 Vol.-%.

In einer bevorzugten Ausführungsform enthält das erfindungsgemäße Nahrungsergänzungsmittel oder Functional Food weiterhin ein Antioxidans. Als Antioxidantien (Antioxidans) werden chemische Verbindungen von verschiedener Struktur bezeichnet, die die Oxidation von anderen Stoffen (z.B. Fettsäuren) mit Sauerstoffverbindungen verhindern oder verringern können. Sie sind natürlicherweise u.a. beispielsweise in Knoblauch, Kohl, Broccoli, Süßholz, Ingwer, Tee, Karotten, Petersilie, Zwiebeln Zitrusfrüchte, Tomaten, Rosmarin, Gurke enthalten. Antioxidantien' haben im Zusammenhang mit der erfindungsgemäßen Lehre die Aufgabe insbesondere die Oxidation von ω-3-Fettsäuren zu verhindern.

In einer besonders bevorzugten Ausführungsform der Erfindung ist das Antioxidans Tocopherol (Vitamin E, E 306) oder ein Antioxidans ausgewählt aus der Gruppe bestehend aus L-Ascorbinsäüre (Vitamin C, E 300), Natrium-L-Ascorbat (E 301), Calcium-L-Ascorbat (E 302), Milchsäure (E 270), Alpha-Tocopherol (E 307), Zitronensäure (E 330). Insbesondere bevorzugt ist das Antioxidans Tocopherol (Vitamin E, E 306). Erfindungsgemäß sind auch Kombinationen dieser Antioxidantien möglich. Sofern ein Antioxidans zugegeben wird, addiert sich dessen Menge zu den übrigen erfindungswesentlichen Komponenten, die sich in diesem Falle nicht mehr zu 100% addieren können (sondern nur zu einem Wert unter 100%). Bevorzugte Mengen des Antioxidans liegen im Bereich unter 1 Vol.-%, beispielsweise 0.2, 0.4, 0.5 oder 0.7 Vol.-%.

Dem Fachmann sind zahlreiche künstliche und natürliche Antioxidantien bekannt, die mit wenigen Ausnahmen in dem erfindungsgemäßen Nahrungsergänzungsmittel oder Functional Food verwendet werden können. Hierzu gehören beispielsweise alle zur Vitamin.E-Familie gezählten Antioxidantien, die hauptsächlich in Nüssen und Sonnenblumenkernen enthalten sind. Sie werden meist auch in Pflanzenölen, Margarine und Kakaoprodukten verwendet. Ein anderes Beispiel ist das zur Gruppe der Carotinoide zählende Lycopin, ein weiteres natürlich vorkommendes Antioxidationsmittel, das hauptsächlich in roten Tomaten enthalten ist (ca. 20 mg/kg). Lycopin gehört zu den stärksten natürlichen Oxidationsschutzstoffen. Studien haben gezeigt, dass Lycopin auch als wirksame Substanz zur Verringerung des Risikos für bestimmte Krebsarten dienen kann.

In einer weiteren bevorzugten Ausführungsform ist das erfindungsgemäße Nahrungsergänzungsmittel oder Functional Food bei Raumtemperatur lagerfähig.

Insbesondere bevorzugt im Sinne der Erfindung ist ein Nahrungsergänzungsmittel oder Functional Food bestehend aus etwa 2 Volumenprozent Mandelöl, etwa 20 Volumenprozent Fischöl, vorzugsweise Lachsöl, etwa 20 Volumenprozent Perillaöl und etwa 0,4 Volumenprozent Vitamin E, wobei die Ergänzung auf 100 Volumenprozent mit Olivenöl als Geschmacksträger erfolgt.

Weiterhin betrifft die vorliegende Erfindung ein Speiseöl und bevorzugt ein Salatöl bestehend aus oder enthaltend das erfindungsgemäße Nahrungsergänzungsmittel oder Functional Food.

Der Begriff "Speiseöl" betrifft jedwede Zubereitung unter Verwendung des erfindungsgemäßen Nahrungsergänzungsmittels oder des erfindungsgemäßen Functional Food, die einer Speise als Öl zugesetzt werden kann. Ein Beispiel hierfür ist die Verwendung eines Speiseöls als Aufstrich oder Tunke für Weißbrot, z.B. bei Weinverkostungen. Es kann ferner in vielen traditionellen Speisen eingesetzt werden, z.B. in "Spaghetti aglio e olio". Das Speiseöl kann neben dem erfindungsgemäßen Nahrungsergänzungsmittel oder Functional Food weitere Geschmackskomponenten wie z.B. Kräuter enthalten.

Schließlich betrifft die vorliegende Erfindung die Verwendung des erfindungsgemäßen Nahrungsergänzungsmittels oder Functional Food als Speiseöl. In einer bevorzugten Ausführungsform der Erfindung ist das Speiseöl ein Salatöl. Des weiteren ist bevorzugt, das die Verwendung nicht-therapeutischen Charakter hat.

Ebenso betrifft die vorliegende Erfindung eine pharmazeutische Zusammensetzung umfassend das oder bestehend aus dem erfindungsgemäße(n) Nahrungsergänzungsmittel.

Des weiteren betrifft die Erfindung die Verwendung des erfindungsgemäßen Nahrungsergänzungsmittel zur Herstellung einer pharmazeutischen Zusammensetzung zur Vorbeugung oder Behandlung von Herz-Kreislauf-Erkrankungen, entzündlichen Erkrankungen und Tumoren.

Ebenso betrifft die vorliegende Erfindung ein Verfahren zur Vorbeugung oder Behandlung von Herz-Kreislauf-Erkrankungen, entzündlichen Erkrankungen und Tumoren, umfassend die Verabreichung einer therapeutisch wirksamen Menge des erfindungsgemäßen Nahrungsergänzungsmittels.

Die genannten Herz-Kreislauf-Erkrankungen umfassen Herzinfarkt, plötzlichen Herztod und Angina pectoris sowie Verkalkung der Blutgefäße (Arteriosklerose) und Bluthochdruck. Entzündliche Erkrankungen umfassen chronische entzündliche Erkrankungen wie Colitis ulcerosa, Morbus Crohn, Rheuma, Mukoviszidose, Rhematoide Arthritis und Lupus erythromatosis. Die Tumore umfassen Tumore des Dickdarms, insbesondere Kolonkarzinom sowie Mammakarzinom, Prostatakarzinom und Ovarialkarzinom.

Das erfindungsgemäße Nahrungsergänzungsmittel oder Functional Food wird vorzugsweise in einem Verfahren hergestellt, umfassend den Schritt oder die Schritte des Mischens zumindest eines Nussöls mit zumindest einer ω-3-fettsäurenhaltigen Quelle, wobei der Gehalt von ω-3-Fettsäuren in der/den ω-3-fettsäurenhaltige(n) Quelle(n) mindestens, 20 Volumenprozent beträgt, und zumindest einem Geschmacksträger, wobei eine Endkonzentration des Nussöls von 0,5 bis 20 Volumenprozent, eine Endkonzentration der ω-3-fettsäurenhaltigen Quelle(n) von 10 bis 90 Volumenprozent, und eine Endkonzentration des Geschmacksträgers von 10 bis 89,5 Volumenprozent erreicht wird. Hierbei sind Herstellungsverfahren umfasst, bei denen sämtliche Komponenten in einem Schrift zusammengegeben und vermischt werden, ebenso wie' Herstellungsverfahren bei denen eine oder mehrere Komponenten einzeln oder nacheinander in ein Gefäß oder einen behälter zugegeben und dann jeweils mit der/den bereits im Gefäß oder Behälter befindlichen Komponenten vermischt werden. Weiterhin kann dieses Herstellungsverfahren die Zugabe weiterer Komponenten umfassen, beispielsweise die Zugabe eines Antioxidans.

Das in dem erfindungsgemäßen Nahrungsergänzungsmittel oder Functional Food und in dem erfindungsgemäßen Herstellungsverfahren verwendete Nussöl ist ein Öl, daß beispielsweise durch Pressung von Nüssen hergestellt wurde.

Das Beispiele erläutern die Erfindung:

Die in Tabellen 1 und 2 dargestellten Kombinationen sind vorteilhafte Ausführungsformen der Erfindung. Die Zahlenwerte stellen Volumenprozentwerte dar.

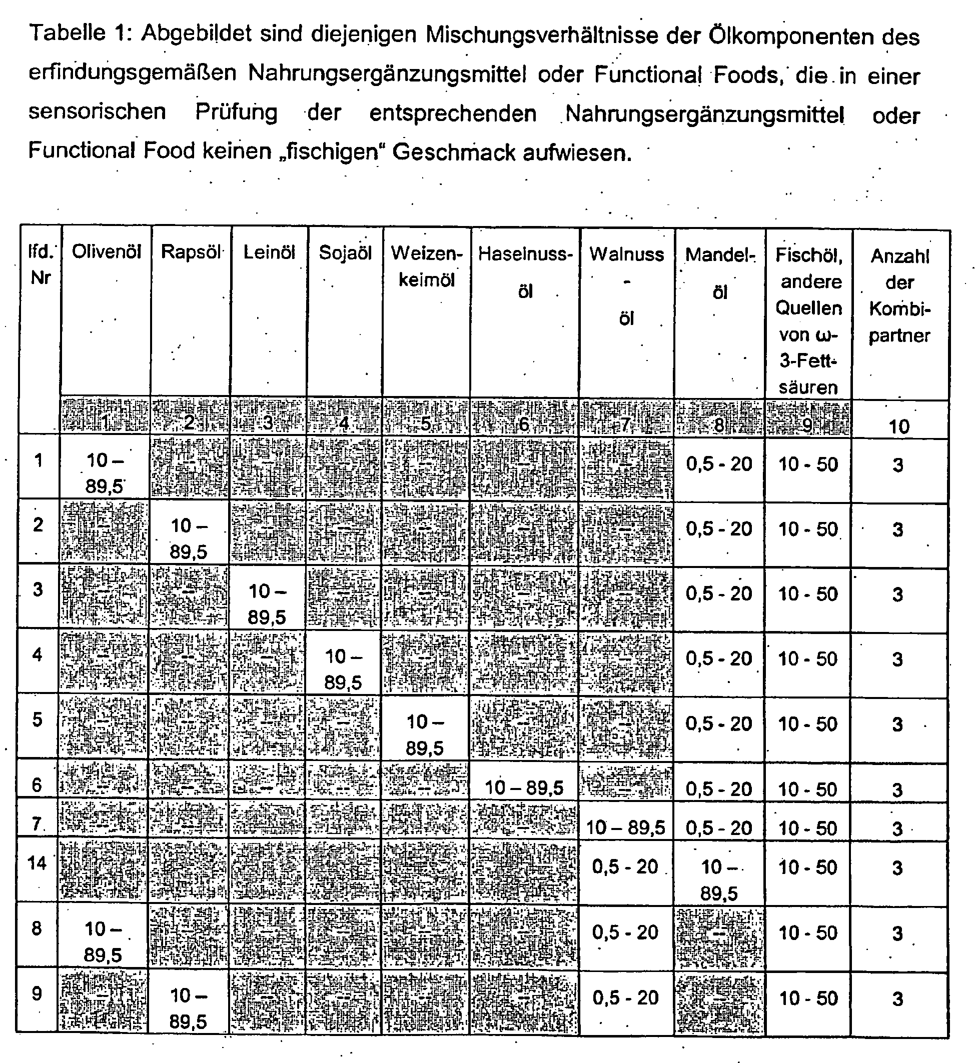

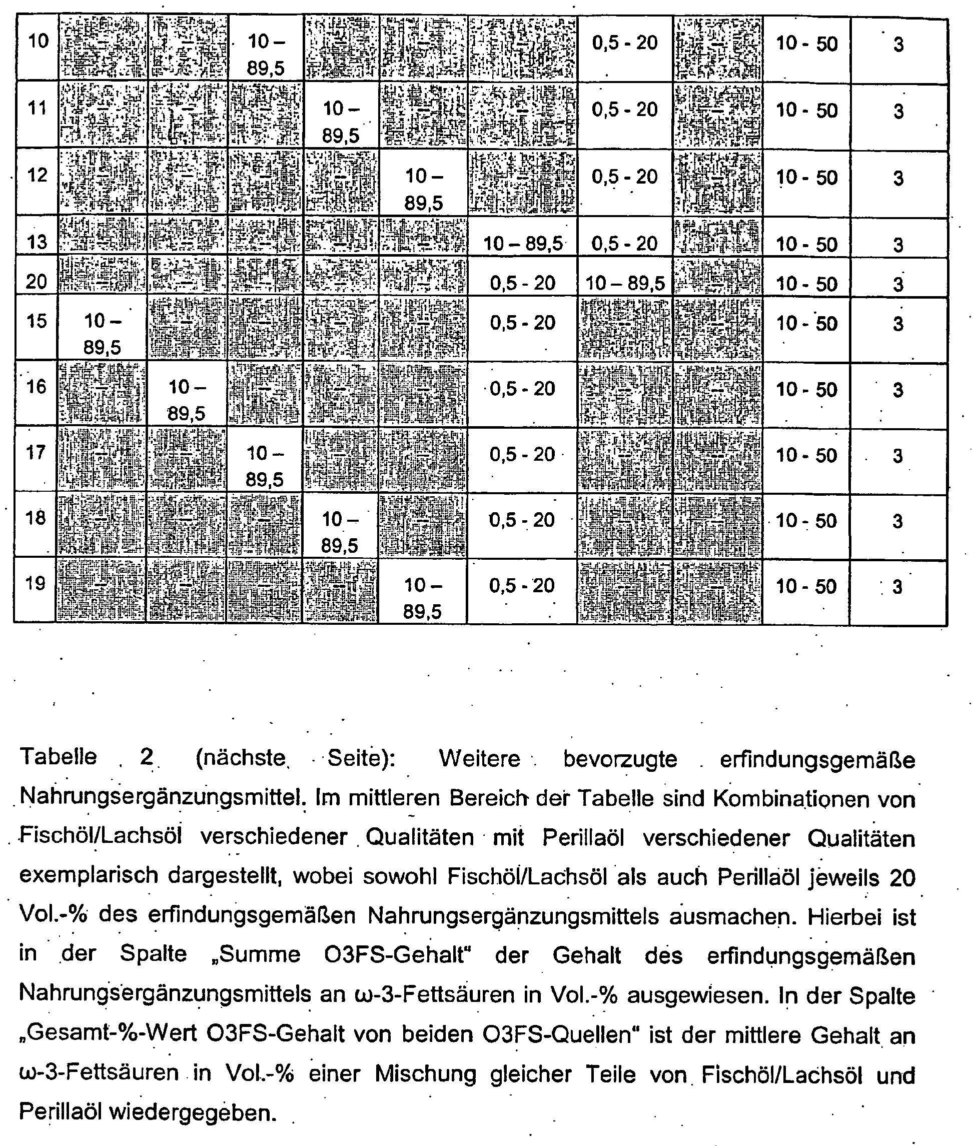

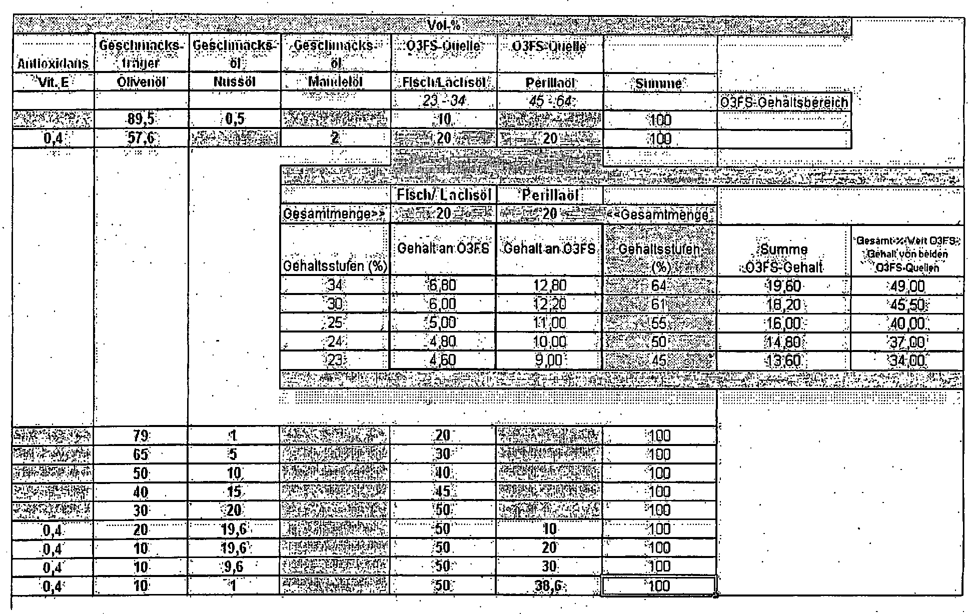

## Patentansprüche

1. Nahrungsergänzungsmittel oder Functional Food enthaltend oder bestehend aus
(a) ein(em) Nussöl in einer Menge von 0,5 bis 20 Volumenprozent;
(b) eine(r) ω-3-fettsäurenhaltige(n) Quelle in einer Menge von 10 bis 50 Volumenprozent, wobei die Gesamtmenge von ω-3-Fettsäuren mindestens 20 Volumenprozent beträgt, und wobei die ω-3-fettsäurehaltige Quelle Perillaöl oder Arganöl ist; und
(c) einen/m Geschmacksträger in einer Menge von 10 bis 89,5 Volumenprozent.

2. Nahrungsergänzungsmittel oder Functional Food enthaltend oder bestehend aus
(a) ein(em) Nussöl in einer Menge von 0,5 bis 20 Volumenprozent;
(b) zwei oder mehr ω-3-fettsäurenhaltige(n) Quellen die zusammen einen Anteil von 10 bis 50 Volumenprozent des Nahrungsergänzungsmittels oder Functional Food bilden, wobei die Gesamtmenge von ω-3-Fettsäuren in jeder der ω-3-fettsäurenhaltigen Quellen mindestens 20 Volumenprozent beträgt, und wobei die zwei oder mehr ω-3-fettsäurehaltigen Quellen zwei oder mehr Öle sind, die das/die ω-3-fettsäurenhaltige(n) Pflanzenöl(e) Perillaöl und/oder Arganöl einschließen; und
(c) einen/m Geschmacksträger in einer Menge von 10 bis 89,5 Volumenprozent.

3. Nahrungsergänzungsmittel oder Functional Food enthaltend oder bestehend aus
(a) ein(em) Nussöl in einer Menge von 0,5 bis 20 Volumenprozent;
(b) zwei oder mehr ω-3-fettsäurenhaltige(n) Quellen die zusammen einen Anteil von 10 bis 90 Volumenprozent des Nahrungsergänzungsmittels oder Functional Food bilden, wobei die Gesamtmenge von ω-3-Fettsäuren in jeder der ω-3-fettsäurenhaltigen Quellen mindestens 20 Volumenprozent beträgt, und wobei die zwei oder mehr ω-3-fettsäurehaltigen Quellen zwei oder mehr Öle sind, die das/die ω-3-fettsäurenhaltige(n) Pflanzenöl(e) Perillaöl und/oder Arganöl einschließen; und
(c) einen/m Geschmacksträger in einer Menge von 10 bis 89,5 Volumenprozent.

4. Nahrungsergänzungsmittel oder Functional Food nach einem der Ansprüche 1 bis 3, wobei das Nussöl Mandelöl, Haselnussöl oder Walnussöl ist.

5. Nahrungsergänzungsmittel oder Functional Food nach einem der Ansprüche 2 bis 4, wobei die Öle ausgewählt sind aus der Gruppe bestehend aus Fischöl, Algenöl, einem ω-3-fettsäurenhaltigen Pflanzenöl und einem aus Planktonmasse hergestellten Öl, wobei die Planktonmasse vorzugsweise im wesentlichen aus Crypthecodinium cohnii besteht.

6. Nahrungsergänzungsmittel oder Functional Food nach einem der Ansprüche 2 bis 5, das zwei ω-3-fettsäurenhaltige Quellen enthält.

7. Nahrungsergänzungsmittel oder Functional Food nach Anspruch 6, wobei eine Quelle ein Fischöl ist.

8. Nahrungsergänzungsmittel oder Functional Food nach einem der Ansprüche 5 bis 7, wobei das Fischöl Lachsöl ist.

9. Nahrungsergänzungsmittel oder Functional Food nach einem der Ansprüche 6 bis 8, wobei die beiden ω-3-fettsäurenhaltige Quellen in gleicher Konzentration, vorzugsweise jeweils 20 Volumenprozent, vorliegen.

10. Nahrungsergänzungsmittel oder Functional Food nach einem der Ansprüche 1 bis 9, wobei die ω-3-Fettsäuren der Quelle oder der Quellen α-Linolensäure, Eicosapentaensäure und/oder Docosahexaensäure ist/sind.

11. Nahrungsergänzungsmittel oder Functional Food nach einem der Ansprüche 1 bis 10, wobei der Geschmacksträger ein Pflanzenöl ist.

12. Nahrungsergänzungsmittel oder Functional Food nach Anspruch 11, wobei das Pflanzenöl Olivenöl, Rapsöl, Leinöl, Sojaöl, Weizenkeimöl, Haselnussöl, Walnussöl oder Mandelöl ist.

13. Nahrungsergänzungsmittel oder Functional Food nach einem der Ansprüche 1 bis 12, weiterhin enthaltend
(d) ein Antioxidans.

14. Nahrungsergänzungsmittel oder Functional Food nach Anspruch 13, wobei das Antioxidans Vitamin E und/oder Vitamin C ist.

15. Speiseöl bestehend aus oder enthaltend das Nahrungsergänzungsmittel oder Functional Food oder Functional Food nach einem der Ansprüche 1 bis 14.

16. Speiseöl nach Anspruch 15, das ein Salatöl ist.

17. Verwendung des Nahrungsergänzungsmittels oder Functional Food nach einem der Ansprüche 1 bis 14 zur Herstellung eines Speiseöls.

18. Verwendung nach Anspruch 17, wobei das Speiseöl ein Salatöl ist.

19. Verfahren zur Herstellung eines Nahrungsergänzungsmittels oder Functional Food, umfassend den Schritt oder die Schritte des Mischens zumindest eines Nussöls mit zumindest einer ω-3-fettsäurenhaltigen Quelle, wobei der Gehalt von ω-3-Fettsäuren in der/den ω-3-fettsäurenhaltige(n) Quelle(n) mindestens 20 Volumenprozent beträgt, und wobei mindestens eine ω-3-fettsäurenhaltige Quelle Perillaöl oder Arganöl ist, und zumindest einem Geschmacksträger, wobei eine Endkonzentration des Nussöls von 0,5 bis 20 Volumenprozent, eine Endkonzentration der ω-3-fettsäurenhaltigen Quelle(n) von 10 bis 90 Volumenprozent, und eine Endkonzentration des Geschmacksträgers von 10 bis 89,5 Volumenprozent erreicht wird.

20. Verfahren nach Anspruch 19, wobei des weiteren ein Antioxidans zugesetzt wird.

21. Pharmazeutische Zusammensetzung umfassend das oder bestehend aus dem Nahrungsergänzungsmittel nach einem der Ansprüche 1 bis 14.

22. Verwendung des Nahrungsergänzungsmittel nach einem der Ansprüche 1 bis 14 zur Herstellung einer pharmazeutischen Zusammensetzung zur Vorbeugung oder Behandlung von Herz-Kreislauf-Erkrankungen, entzündlichen Erkrankungen und Tumoren.

## Claims

1. Food supplement or functional food comprising or consisting of
(a) a nut oil in an amount of 0.5 to 20 % vol.;
(b) a source containing ω-3 fatty acids in an amount of 10 to 50 % vol., wherein the total amount of ω-3 fatty acids is at least 20 % vol., and wherein the source containing ω-3 fatty acids is perilla oil or argan oil; and
(c) a flavour carrier in an amount of 10 to 89.5 % vol.

2. Food supplement or functional food comprising or consisting of
(a) a nut oil in an amount of 0.5 to 20 % vol.;
(b) two or more sources containing ω-3 fatty acids, which together form a portion of 10 to 50 % vol. of the food supplement or functional food, wherein the total amount of ω-3 fatty acids in each of the sources containing ω-3 fatty acids is at least 20 % vol., and wherein the two or more sources containing ω-3 fatty acids are two or more oils including the ω-3 fatty acids-containing vegetable oil(s) perilla oil and/or argan oil; and
(c) a flavour carrier in an amount of 10 to 89.5 % vol.

3. Food supplement or functional food comprising or consisting of
(a) a nut oil in an amount of 0.5 to 20 % vol.;
(b) two or more sources containing ω-3 fatty acids, which together form a portion of 10 to 90 % vol. of the food supplement or functional food, wherein the total amount of ω-3 fatty acids in each of the sources containing ω-3 fatty acids is at least 20 % vol., and wherein the two or more sources containing ω-3 fatty acids are two or more oils including the ω-3 fatty acids-containing vegetable oil(s) perilla oil and/or argan oil; and
(c) a flavour carrier in an amount of 10 to 89.5 % vol.

4. A food supplement or functional food according to any one of claims 1 to 3, wherein the nut oil is almond oil, hazelnut oil or walnut oil.

5. A food supplement or functional food according to any one of claims 2 to 4, wherein the oils are selected from the group consisting of fish oil, algae oil, a vegetable oil containing ω-3 fatty acids and an oil produced from plancton, wherein preferably the plancton essentially consists of Crypthecodinium cohnii.

6. A food supplement or functional food according to any one of claims 2 to 5, containing two sources containing ω-3 fatty acids.

7. The food supplement or functional food according to claim 6, wherein a source is a fish oil.

8. The food supplement or functional food according to claims 5 to 7, wherein the fish oil is salmon oil.

9. A food supplement or functional food according to any one of claim 6 to 8, wherein the two sources containing ω-3 fatty acids are present in the same concentration, preferably 20 % vol. each.

10. A food supplement or functional food according to any one of claims 1 to 9, wherein the ω-3 fatty acids of the source or sources is/are α-linoleic acid, eicosapentenoic acid and/or docosahexanoic acid.

11. A food supplement or functional food according to any one of claims 1 to 10, wherein the flavour carrier is a vegetable oil.

12. The food supplement or functional food according to claim 11, wherein the vegetable oil is olive oil, rape-seed oil, linseed oil soy bean oil, wheat germ oil, hazelnut oil, walnut oil or almond oil.

13. A food supplement or functional food according to any one of claims 1 to 12, further comprising
(d) an antioxidant.

14. The food supplement or functional food according to claim 13, wherein the antioxidant is vitamin E and/or vitamin C.

15. An edible oil consisting of or comprising the food supplement or functional food according to any one of claims 1 to 14.

16. The edible oil according to claim 15, which is a salad oil.

17. Use of the food supplement or functional food according to any one of claims 1 to 14 for the manufacture of edible oil.

18. Use according to claim 17, wherein the edible oil is a salad oil.

19. Method for the production of a food supplement or functional food, comprising the step or the steps of mixing at least one nut oil with at least one source containing ω-3 fatty acids, wherein the content of ω-3 fatty acids in the source(s) containing ω-3 fatty acids is at least 20 % vol., and wherein at least one source containing ω-3 fatty acids is perilla oil or argan oil, and at least one flavour carrier, wherein a final concentration of 0.5 to 20 % vol. of nut oil, a final concentration of 10 to 90 % vol. of the source(s) containing ω-3 fatty acids and a final concentration of 10 to 89,5 % vol. of the flavour carrier is reached.

20. The method according to claim 19, wherein further an antioxidant is added.

21. Pharmaceutical composition comprising or consisting of the food supplement according to any one of claims 1 to 14.

22. Use of the food supplement according to any one of claims 1 to 14 for the production of a pharmaceutical composition for the prophylaxis or treatment of cardiovascular diseases, inflammatory diseases and tumours.

## Revendications

1. Complément alimentaire ou aliment fonctionnel, contenant ou se composant de
(a) une huile de fruits à coque en une quantité de 0,5 à 20 % en volume ;
(b) une source contenant des acides gras ω-3 en une quantité de 10 à 50 % en volume, où la quantité totale des acides gras ω-3 atteint au moins 20 % en volume, et où la source contenant les acides gras ω-3 est l'huile de perilla ou l'huile d'argan ; et
(c) un vecteur d'arômes en une quantité de 10 à 89,5 % en volume.

2. Complément alimentaire ou aliment fonctionnel, contenant ou se composant de
(a) une huile de fruits à coque en une quantité de 0,5 à 20 % en volume ;
(b) deux sources ou plus contenant des acides gras ω-3, formant conjointement une proportion de 10 à 50 % en volume du complément alimentaire ou de l'aliment fonctionnel, où la quantité totale des acides gras ω-3 atteint, dans chacune des sources contenant des acides gras ω-3, au moins 20 % en volume, et où les deux sources ou plus contenant des acides gras ω-3 sont deux huiles ou plus qui comprennent les huiles végétales contenant des acides gras ω-3 huile de perilla et / ou huile d'argan ; et
(c) un vecteur d'arômes en une quantité de 10 à 89,5 % en volume.

3. Complément alimentaire ou aliment fonctionnel, contenant ou se composant de
(a) une huile de fruits à coque en une quantité de 0,5 à 20 % en volume ;
(b) deux sources ou plus contenant des acides gras ω-3, formant conjointement une proportion de 10 à 90 % en volume du complément alimentaire ou de l'aliment fonctionnel, où la quantité totale des acides gras ω-3 atteint, dans chacune des sources contenant des acides gras ω-3, au moins 20 % en volume, et où les deux sources ou plus contenant des acides gras ω-3 sont deux huiles ou plus qui comprennent les huiles végétales contenant des acides gras ω-3 huile de perilla et / ou huile d'argan ; et
(c) un vecteur d'arômes en une quantité de 10 à 89,5 % en volumes.

4. Complément alimentaire ou aliment fonctionnel selon l'une des revendications 1 à 3, dans lequel l'huile de fruits à coque est l'huile d'amande, l'huile de noisette ou l'huile de noix.

5. Complément alimentaire ou aliment fonctionnel selon l'une des revendications 2 à 4, dans lequel les huiles sont choisies dans le groupe constitué par l'huile de poisson, l'huile d'algues, une huile végétale contenant des acides gras ω-3 et une huile préparée à partir d'une masse de plancton, où la masse de plancton est constituée de préférence essentiellement de *Crypthecodinium cohnii.*

6. Complément alimentaire ou aliment fonctionnel selon l'une des revendications 2 à 5, qui contient deux sources contenant des acides gras ω-3.

7. Complément alimentaire ou aliment fonctionnel selon la revendication 6, dans lequel une source est une huile de poisson.

8. Complément alimentaire ou aliment fonctionnel selon l'une des revendications 5 à 7, dans lequel l'huile de poisson est l'huile de saumon.

9. Complément alimentaire ou aliment fonctionnel selon l'une des revendications 6 à 8, dans lequel les deux sources contenant des acides gras ω-3 sont présentes en la même concentration, de préférence respectivement 20 % en volume.

10. Complément alimentaire ou aliment fonctionnel selon l'une des revendications 1 à 9, dans lequel les acides gras ω-3 de la source ou des sources sont l'acide α-linolénique, l'acide éicosapentaènoïque et / ou l'acide docosahexaènoïque.

11. Complément alimentaire ou aliment fonctionnel selon l'une des revendications 1 à 10, dans lequel le vecteur d'arômes est une huile végétale.

12. Complément alimentaire ou aliment fonctionnel selon la revendication 11, dans lequel l'huile végétale est l'huile d'olive, l'huile de colza, l'huile de lin, l'huile de soja, l'huile de germes de blé, l'huile de noisette, l'huile de noix ou l'huile d'amande.

13. Complément alimentaire ou aliment fonctionnel selon l'une des revendications 1 à 12, contenant en outre
(d) un antioxydant.

14. Complément alimentaire ou aliment fonctionnel selon la revendication 13, dans lequel l'antioxydant est la vitamine E et / ou la vitamine C.

15. Huile de table se composant ou contenant le complément alimentaire ou l'aliment fonctionnel selon l'une des revendications 1 à 14.

16. Huile de table selon la revendication 15, qui est une huile d'assaisonnement.

17. Utilisation du complément alimentaire ou de l'aliment fonctionnel selon l'une des revendications 1 à 14 pour la préparation d'une huile de table.

18. Utilisation selon la revendication 17, dans laquelle l'huile de table est une huile d'assaisonnement.

19. Procédé de préparation d'un complément alimentaire ou d'un aliment fonctionnel, comprenant l'étape ou les étapes de mélange d'au moins une huile de fruits à coque avec au moins une source contenant des acides gras ω-3, où la teneur en acides gras ω-3 dans la ou les sources contenant des acides gras ω-3 atteint au moins 20 % en volume et où au moins une source contenant des acides gras ω-3 est l'huile de perilla ou l'huile d'argan, et d'au moins un vecteur d'arômes, une concentration finale en huile de fruits à coque allant de 0,5 à 20 % en volume, une concentration finale en source ou sources contenant des acides gras ω-3 allant de 10 à 90 % en volume, et une concentration finale du vecteur d'arômes allant de 10 à 89,5 % en volume.

20. Procédé selon la revendication 19, dans lequel un antioxydant est en plus ajouté.

21. Composition pharmaceutique comprenant ou se composant du complément alimentaire selon l'une des revendications 1 à 14.

22. Utilisation du complément alimentaire selon l'une des revendications 1 à 14 pour la préparation d'une composition pharmaceutique destinée à la prévention ou au traitement des maladies cardio-vasculaires, des maladies inflammatoires et des tumeurs.
